(19) Europäisches Patentamt
European Patent Office
Office européen des brevets

(11) EP 0 602 353 B1

(12) **EUROPÄISCHE PATENTSCHRIFT**

(45) Veröffentlichungstag und Bekanntmachung des Hinweises auf die Patenterteilung:
**03.07.1996 Patentblatt 1996/27**

(51) Int. Cl.$^6$: **B60T 17/22**, B60T 15/36

(21) Anmeldenummer: **93117206.8**

(22) Anmeldetag: **23.10.1993**

(54) **Bremsanlage mit wenigstens einer Bremse**

Brake installation with at least one brake

Installation de freinage avec au moins un frein

(84) Benannte Vertragsstaaten:
**DE FR IT SE**

(30) Priorität: **18.12.1992 DE 4242887**

(43) Veröffentlichungstag der Anmeldung:
**22.06.1994 Patentblatt 1994/25**

(73) Patentinhaber: **WABCO Standard GmbH**
**D-53121 Bonn (DE)**

(72) Erfinder: **Eckert, Horst**
**D-31547 Rehburg-Loccum (DE)**

(74) Vertreter: **Schrödter, Manfred, Dipl.-Ing.**
**WABCO Standard GmbH**
**Postfach 91 12 80**
**D-30432 Hannover (DE)**

(56) Entgegenhaltungen:
**EP-A- 0 183 089**       **EP-A- 0 512 226**
**CH-A- 622 744**        **DE-A- 3 502 825**
**GB-A- 1 412 183**       **GB-A- 2 093 938**

**Beschreibung**

Die Erfindung betrifft eine Bremsanlage mit wenigstens einer durch Zufuhr von Zuspannenergie betätigten Bremse gemäß dem Oberbegriff des Patentanspruchs 1.

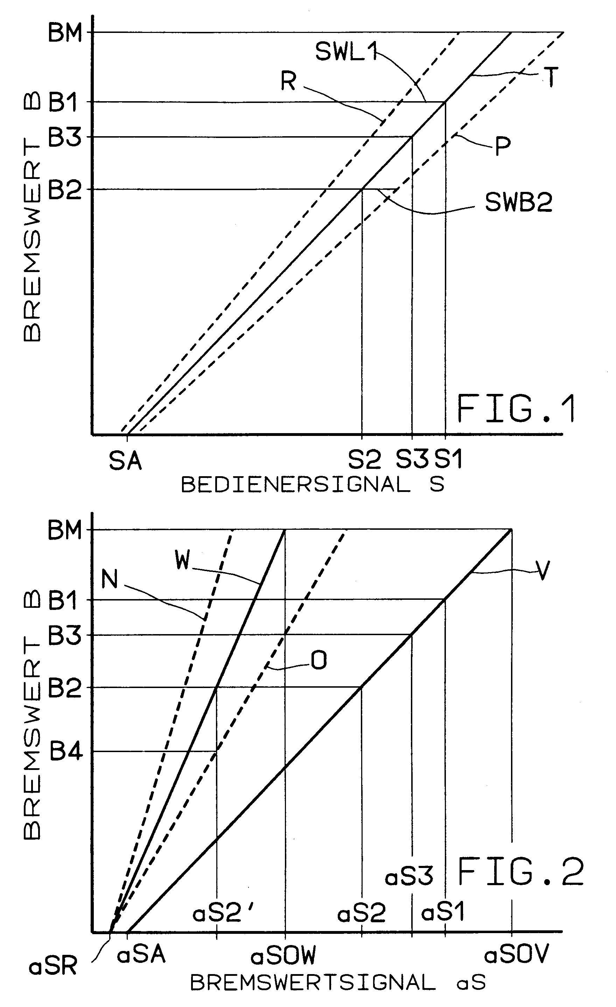

Eine derartige Bremsanlage ist aus der DE 35 02 825 A1 bekannt. In dieser stellt der Bediener mittels des Bremswertgebers ein Bedienersignal ein und gibt damit der Bremsanlage seine Bremswertforderung bekannt. Die Zuordnung von Bremswert und Bedienersignal kann in einem Kennfeld mit dem Bremswert (B) und dem Bedienersignal (S) als Koordinaten als eine Soll-Kennlinie dargestellt werden. Figur 1 zeigt schematisch ein solches Kennfeld mit einer durchgezogen gezeichneten Soll-Kennlinie (T). Die Soll-Kennlinie (T) kommt wegen der unvermeidlichen Ansprechwiderstände der Bremse erst bei einem bestimmten Bediensignalwert SA aus Null heraus. Dabei ist Bremswert eine Größe, die von der von der Bremse erzeugten Bremskraft abhängt. Der Bremswert hängt ausschließlich von der genannten Bremskraft ab, wenn diese selbst den Bremswert darstellt. Überwiegend wird aber der Bremswert zusätzlich zur Bremskraft durch Parameter des gebremsten Gegenstands bestimmt. In der Fahrzeugtechnik sind beispielsweise als Bremswert die Bremskraft zwischen Rad und Straße und die Fahrzeugverzögerung gebräuchlich, wobei in bekannter Weise Abmessungen des Fahrzeugs bzw. von Fahrzeugteilen bzw. das Fahrzeuggewicht den Bremswert mitbestimmen. In der bereits erwähnten DE 35 02 825 A1 bekannten Bremsanlage werden als Bremswert die Fahrzeugverzögerung, die Bremskraft und die Kraftschlußausnutzung, beide zuletzt erwähnten zwischen Rad und Straße, genannt. Die Steuereinrichtung gibt bei Erhalt eines Bedienersignals ein Bremswertsignal an die Energie-Zumeßeinrichtung ab, die daraufhin Zuspannenergie an die Bremse liefert, welche sie nach der Größe des Bremswertsignals, oft aber außerdem nach weiteren Signalen, bemißt. Die Bremse gibt dann eine der zugeführten Zuspannenergie entsprechende Bremskraft ab. Bei der bekannten Bremsanlage bemißt die Steuereinrichtung das Bremswertsignal immer gleich oder proportional dem Bedienersignal.

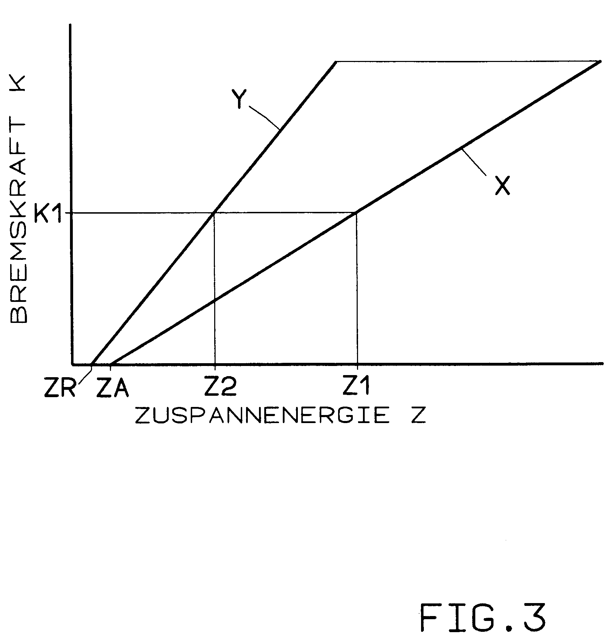

Die Bremse weist aufgrund ihrer Hysterese unterschiedlich verlaufende Kennlinien der abgegebenen Bremskraft (K) als Funktion der Zuspannenergie (Z) für die Bremsbetätigung und das Bremslösen auf. Dies veranschaulicht das schematische Bremskraft/Zuspannenergie-Kennfeld gemäß Figur 3. Bei einer Bremsbetätigung, d. h. bei steigender bzw. bei gleichbleibender Zuspannenergie (Z), verläuft die Bremskraft (K) von einem zur Überwindung der Ansprechwiderstände erforderlichen Zuspannenergiewert ZA ab gemäß der Kennlinie (X). Bei einem Bremslösen, d. h. bei abfallender Zuspannenergie (Z), verläuft die Bremskraft (K) gemäß der Kennlinie (Y). Wegen der Ansprechwiderstände wird beim Bremslösen die Bremskraft (K) schon bei einer Restenergie ZR zu Null. Es sei angenommen, die Bremse sei bis zu einem Punkt mit den Koordinaten Zuspannenergie Z1 und Bremskraft K1 betätigt. Wird nun zwecks Bremslösens die Zuspannenergie (Z) verringert, so hat das auf die Bremskraft K1 keine Auswirkungen, bevor die Zuspannenergie (Z) bei einem Wert Z2 die Kennliniendifferenz überwindet und die Kennlinie (Y) für das Bremslösen erreicht. Erst bei weiter fallender Zuspannenergie (Z) nimmt die Bremskraft (K) gemäß der Kennlinie (Y) für das Bremslösen ab. Die erwähnte Kennliniendifferenz ist die dem Punkt Z1/K1 zugeordnete Hysterese, die Fläche zwischen den Kennlinien (X) und (Y) ist das Hysteresefeld.

Diese Eigenschaft der Bremse wirkt sich auf die Bremsanlage dahin aus, daß der von dieser erzeugte Bremswert (B) als Funktion des Bremswertsignals (aS) ebenfalls nach unterschiedlichen Kennlinien für die Bremsbetätigung und das Bremslösen verläuft. Dies veranschaulicht Figur 2 mit den entsprechenden Kennlinien (V) und (W). In diesem Kennfeld stellen die Kennliniendifferenz bzw. die Fläche zwischen den Kennlinien (V, W) die Hysterese bzw. das Hysteresefeld der Bremsanlage dar. Analog zu Figur 3 stellen die Bremswertsignalwerte aSA bzw. aSR durch die Ansprechwiderstände bzw. die auf diesen beruhende Restenergie bedingte Anfangs- bzw. Endpunkte der Kennlinien (V, W) dar. Ist die Bremsanlage beispielsweise bis zu einem Punkt mit den Koordinaten Bremswertsignal aS1 und Bremswert B1 betätigt und wird das Bremswertsignal (aS) verringert, so bedarf es - analog zu dem zu Figur 3 Gesagten - der Überwindung der dem Punkt aS1/B1 zugeordneten Kennliniendifferenz bzw. Hysterese, bevor die Bremsanlage auf die Bremswertsignalverringerung anspricht und den Bremswert (B) mindert. Wegen der oben erwähnten ständigen Aufrechterhaltung der Gleichheit bzw. Proportionalität von Bedienersignal und Bremswertsignal bedeutet das gerade beschriebene Verhalten der bekannten Bremsanlage in Abhängigkeit vom Bremswertsignal (aS) eine gleiche bzw. gleichartige Abhängigkeit vom Bedienersignal (S). Mit anderen Worten: Das Bedienersignal (S) muß bei einem Bremslösen erst um einen der Hysterese entsprechenden Wert abfallen, bevor die Bremsanlage mit einer Bremswertminderung anspricht. Der zur Überwindung der Hysterese und damit zum Hervorrufen einer Reaktion dieser Bremsanlage erforderliche "Leerabfall" des Bedienersignals (S) bringt eine Ansprechverzögerung beim Bremslösen mit sich.

Aus der CH-A-622 744 ist eine Bremsanlage bekannt, die bei einer Bremsbetätigung zunächst einen großen Druckabfall und anschließend einen linear verlaufenden Druckabfall und beim Bremslösen zunächst einen größeren Bereich linearen Druckanstiegs mit anschließendem kleinerem Drucksprung zeigt. Die unterschiedlichen Druckcharakteristiken dieser Bremsanlage für die Bremsbetätigung und das Bremslösen werden durch Betätigungsorgane erzeugt, die bei der Bremsbetätigung anders wirken als beim Bremslösen. Die Unterschiede in den Wirkungen dieser Organe nennt dieses Dokument "Hysterese".

Der Erfindung liegt die Aufgabe zugrunde, eine Bremsanlege der eingangs genannten Art mit einfachen Mitteln so zu verbessern, daß sie beim Bremslösen wenigstens eine verringerte Ansprechverzögerung bietet. Diese Aufgabe wird durch die im Patentanspruch 1 engegebene Erfindung gelöst. Vorteilhafte Weiterbildungen und Ausgestaltungen sind in den Unteransprüchen angegeben.

Da die Bremswert/Bremswertsignal-Kennlinie der bekannten Bremsanlage für das Bremslösen den gleichen Bremswert-Bereich wie die Kennlinie für die Bremsbetätigung abdeckt, ihr dafür aber ein geringerer Bremswertsignal-Bereich und somit dem Bediener ein geringerer Bedienersignal-Bereich zur Verfügung stehen, ist die bekannte Bremsanlage beim Bremslösen durch den Bediener schlechter abstufbar als beim Bremsbetätigen. Diesen Nachteil beseitigt die Erfindung.

Die Ansprechverzögerung und die schlechtere Abstufbarkeit beim Bremslösen führen in der Praxis häufig dazu, daß der Bediener das Bedienersignal (S) und damit das Bremswertsignal (aS) zu stark verringert und infolgedessen einen ungewollt geringen Bremswert erzielt. Will nun der Bediener doch den von ihm eigentlich geforderten Bremswert erzielen, so muß er dazu bei der bekannten Bremsanlage das Bedienersignal (S) bzw. das Bremswertsignal (aS) so vergrößern, daß dieses zunächst die Hysterese bis zur Kennlinie für die Bremsbetätigung überspringt und dann nach Maßgabe derselben den eigentlich geforderten Bremswert bestimmt. Das erforderliche Überspringen der Hysterese hat eine Ansprechverzögerung beim Wiederbetätigen bzw. Rückbetätigen der bekannten Bremsanlage sowie einen erhöhten Verbrauch an Zuspannenergie zur Folge. Diese Nachteile verringert oder vermeidet gar die Erfindung in der Fortbildung nach dem Patentanspruch 2.

Da es bei der bekannten Bremsanlage für den Bediener schwierig ist, die seinen Bremswertforderungen entsprechenden Bedienersignalwerte bzw. Bremswertsignalwerte beim Bremslösen und beim Wieder- bzw. Rückbetätigen abzuschätzen und einzustellen, ist eine feinfühlige Bedienung der bekannten Bremsanlage insgesamt schwierig. Auch insoweit schafft die Erfindung in der Fortbildung nach Patentanspruch 2 eine Verbesserung.

Subjektiv empfindet der Bediener die bekannte Bremsanlage als träge und hart. Dieses Empfinden verbessert die Fortbildung der Erfindung nach Patentanspruch 2.

Die Erfindung ist für alle technischen Gebiete, in denen die vorstehend und nachstehend erläuterten Probleme auftreten, und für jede Art von Zuspannenergie geeignet. Ein wichtiges Einsatzgebiet der Erfindung sind Bremsanlagen in der Fahrzeugtechnik, in denen der Druck eines hydraulischen und/oder pneumatischen Druckmittels als Zuspannenergie herangezogen wird, wobei als pneumatisches Druckmittel in der Regel Druckluft dient.

Weitere Vorteile der Erfindung werden in deren nunmehr folgender Erläuterung anhand zeichnerischer Darstellungen genannt. In den Zeichnungen zeigen

Figur 1     schematisch ein Kennfeld mit einer Soll-Kennlinie einer Bremsanlage,

Figur 2     schematisch ein Kennfeld mit Ist-Kennlinien der Bremsanlage,

Figur 3     schematisch ein Kennfeld mit Ist-Kennlinien der von der Bremsanlage beinhalteten Bremse,

sowie, mit durchgezogenen Linien für Energieleitungen und strichpunktierten Linien für Signalleitungen,

Figur 4     schematisch eine Bremsanlage.

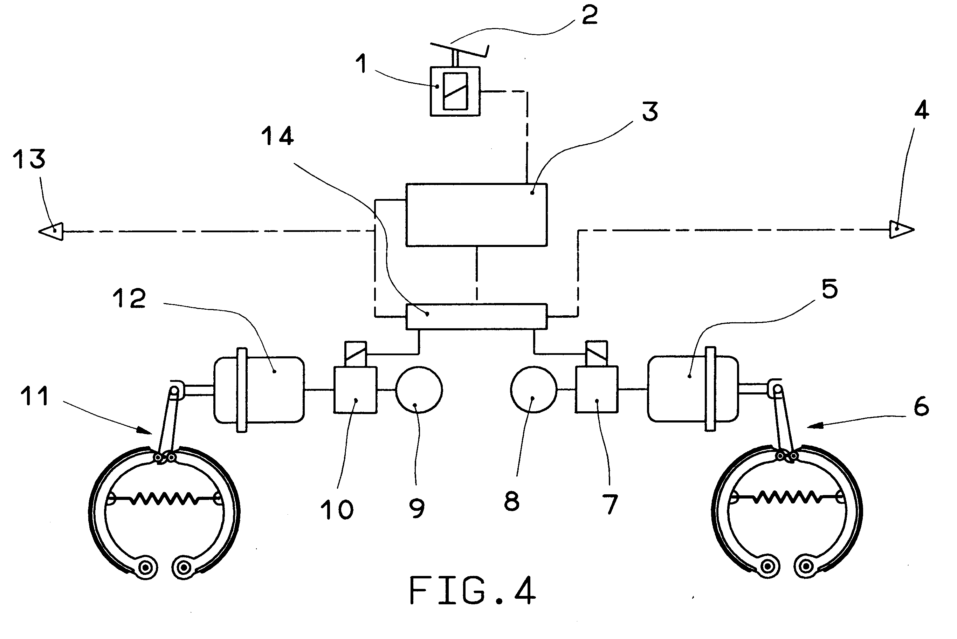

Die in Figur 4 dargestellte Bremsanlage besitzt in der Grundausführung eine durch Zufuhr von Zuspannenergie aus einem Energievorrat (9) betätigte Bremse (11, 12). Die Bremse (11, 12) besteht in üblicher Weise aus einem die Bremskraft erzeugenden Bremsapparat (11) und einer die Zuspannenergie empfangenden und in Zuspannkraft für den Bremsapparat (11) umformenden Zuspanneinrichtung (12) sowie zugehörigen Übertragungsteilen, die nicht näher bezeichnet sind.

Der Bremse (11, 12) ist eine Energie-Zumeßeinrichtung (10, 14) vorgeordnet, welche die Höhe der der Bremse (11, 12), genauer: der Zuspanneinrichtung (12), zugeführten Zuspannenergie bestimmt. Die Energie-Zumeßeinrichtung (10, 14) besteht aus einem elektronischen Steuergerät (14) und einem elektrisch gesteuerten Energieverteiler (10). Der Steuerteil des Energieverteilers (10) ist mit dem Steuergerät (14) verbunden und wird von dem Steuergerät (14) über ein von diesem erzeugtes Energiesignal gesteuert. Der Energieverteiler (10) ist in bekannter Weise aufgebaut und einerseits mit dem Energiespeicher (9) und andererseits mit der Zuspanneinrichtung (12) und außerdem in nicht dargestellter Weise mit einer Energie-Entlastungseinrichtung verbunden. Nach Maßgabe des Energiesignals verbindet der Energieverteiler (10) die Zuspanneinrichtung (12) mit dem Energiespeicher (9) oder der Energie-Entlastungseinrichtung oder hält er die der Zuspanneinrichtung (12) zugeführte Zuspannenergie aufrecht.

Die Bremsanlage weist außerdem einen vom Bediener betätigbaren elektrischen Bremswertgeber (1) und eine einerseits mit diesem und andererseits mit dem Steuergerät (14) verbundene elektronische Steuereinrichtung (3) auf. In der Steuereinrichtung (3) und in dem Steuergerät (14) sind alle zur Durchführung der nachstehend beschriebenen Funktionen erforderlichen elektronischen Bauelemente vorgesehen und programmiert. Die Steuereinrichtung (3) und das Steuergerät (14) können in üblicher Weise elektrisch und/oder körperlich zu einer oder mehreren Baueinheiten zusammengefaßt sein.

Der Bediener betätigt die Bremsanlage, indem er mittels eines Stellglieds (2), welches zeichnerisch als Pedal- oder Handhebel dargestellt ist, in Form einer Stellgliedkraft und/oder eines Stellgliedwegs einen Bremswert (B) bestimmter Größe fordert. Der Bremswertgeber (1) gibt daraufhin an die Steuereinrichtung (3) ein dem geforderten Bremswert entsprechendes Bedienersignal (S) ab. Zwecks eines anschließenden teilweisen oder vollständigen Bremslösens verringert der Bediener die Stellgliedkraft und/oder den Stellgliedweg, woraufhin der Bremswertgeber (1) das Bedienersignal (S) entsprechend verringert. Als optimal empfindet es der Bediener, wenn sich sowohl bei der Bremsbetätigung als auch beim Bremslösen der von der Bremsanlage abgegebene Bremswert (B) als Funktion des Bedienersignals (S) gemäß der Soll-Kennlinie (T) nach Figur 1 verhält.

In der Steuereinrichtung (3) sind die Soll-Kennlinie (T) gemäß Figur 1 und die Kennlinie (V) für die Bremsbetätigung gemäß Figur 2 gespeichert.

Bei Erhalt eines Bedienersignals (S) gibt die Steuereinrichtung (3) ein Bremswertsignal (aS) an das Steuergerät (14) ab. Dieses gibt daraufhin ein entsprechendes Energiesignal an den Energieverteiler (10) ab, der daraufhin aus dem Energiespeicher (9) soviel Zuspannenergie zu der Zuspanneinrichtung (12) bzw. aus der Zuspanneinrichtung (12) zu der Energie-Entlastungseinrichtung durchläßt bzw. soviel Zuspannenergie in der Zuspanneinrichtung (12) hält, wie zur Erzeugung des geforderten Bremswertes (B) erforderlich ist. Je nach spezieller Ausbildung kann die Energie-Zumeßeinrichtung (10, 14) ein Steuerkreis oder ein Regelkreis für den Bremswert (B) sein, wobei in letzterem Fall die Energie-Zumeßeinrichtung (10, 14), wie schematisch angedeutet, noch eines Bremswertsensors (13) bedarf.

Den infolge der Hysterese der Bremse (11, 12) erzielbaren Verlauf des von der Bremsanlage erzeugten Bremswertes (B) als Funktion des Bremswertsignals (aS) zeigt - wie bereits ausgeführt - Figur 2. Bei einer Bremsbetätigung kann das Bremswertsignal (aS), je nach Ausbildung der Steuereinrichtung (3), das durchgeschleifte Bedienersignal (S) oder ein diesem gleiches oder proportionales Signal sein. Dies ist durch die Bezeichnung "aS" des Bremswertsignals angedeutet, worin "a" als Porportionalitätsfaktor zu verstehen ist, der gegebenenfalls 1 ist.

Es sei angenommen, der Bediener habe den Bremswertgeber (1) zunächst zu dem einem ersten Bremswertsignalwert aS1 in Figur 2 entsprechenden und einen ersten Bremswert B1 fordernden ersten Bedienersignalwert S1 betätigt, wolle dann die Bremsanlage etwas lösen, nehme zu diesem Zweck das Bedienersignal (S) auf einen zweiten Bedienersignalwert S2 zurück und fordere damit einen diesem entsprechenden zweiten Bremswert B2. Dann stellt die Steuereinrichtung (3) das Bremswertsignal (aS) nicht auf den Wert aS2 ein, der wegen der Gleichheit bzw. der Proportionalität beider Signale bei der Bremsbetätigung gemäß der Kennlinie (V) in Figur 2 dem zweiten Bedienersignalwert (S2) entspricht, sondern auf einen zweiten Bremswertsignalwert aS2' dem gemäß der Kennlinie (W) für das Bremslösen in Figur 2 der vom Bediener geforderte zweite Bremswert B2 zugeordnet ist. Die Steuereinrichtung (3) stellt also unter Überspringen der Hysterese direkt den zweiten Bremswertsignalwert aS2' ein, aufgrund dessen die Energie-Zumeßeinrichtung (10, 14) die zur Erzeugung des geforderten geringeren zweiten Bremswertes B2 erforderliche Zuspannenergie abgibt.

Durch diese Funktionsweise bewirkt die Steuereinrichtung (3), daß sich die Bremsanlage gemäß der Soll-Kennlinie (T) in Figur 1 verhält. Daraus ergibt sich für den Bediener der Eindruck einer hysteresefreien Bremse, da er beim Bremslösen eine sofortige und feinfühlige Reaktion der Bremsanlage feststellt.

Einzelheiten des Funktionsablaufs innerhalb der Steuereinrichtung (3) werden nun, gestützt auf die Figuren 1 und 2, erläutert. In der Steuereinrichtung (3) ist auch die Beziehung (I)

$$aS2'=aS2-[aSA-aSR+(aSOV-aSOW-aSA+aSR) \cdot (aS2-aSA)/(aSOV-aSA)]$$

gespeichert. Darin stellen aSOV bzw. aSOW die dem Höchstwert der (im Energiespeicher 9) zur Verfügung stehenden Zuspannenergie entsprechenden Bremssignalwerte der Kennlinien (V, W) für die Bremsbetätigung bzw. das Bremslösen und aSA bzw. aSR die Bremssignalwerte der bereits erwähnten unteren Anfangs- bzw. Endpunkte dieser Kennlinien dar. Die Beziehung (I) gibt den zweiten Bremswertsignalwert aS2' an, dem gemäß der Kennlinie (W) für das Bremslösen der gleiche Bremswert B2 zugeordnet ist wie der Kennlinie (V) für die Bremsbetätigung bei dem Bremswertsignalwert aS2.

Der zweite Bremswertsignalwert aS2' ist der Bremswertsignalwert aS2 vermindert um die ihm zugeordnete Hysterese. Der Ausdruck in eckigen Klammern der rechten Seite der Beziehung (I) gibt diese Hysterese an. Die Beziehung (I) ist aus den Gleichungen B=f(aS) der Kennlinien (V, W) abgeleitet.

Die Steuereinrichtung (3) wird durch die Zuführung bzw. das Erlöschen eines Bedienersignals (S) ein- bzw. ausgeschaltet. Mittels eines installierten Mikroprozessors fragt die Steuereinrichtung (3) während ihrer Einschaltdauer mit einer bestimmten Umlauffrequenz das Bedienersignal (S) ab. Stellt die Steuereinrichtung (3) nach dem Einschalten von Umlauf zu Umlauf nur steigende oder gleichbleibende Bedienersignalwerte fest, so gibt sie das Bedienersignal (S) als Bremswertsignal (aS) ab bzw. errechnet aus dem Bedienersignal (S) das Bremswertsignal (aS) und gibt dieses ab. Stellt die Steuereinrichtung (3) jedoch von einem Umlauf zum nächsten einen Abfall des Bedienersignals (S) von dem letzten Bedienersignalwert S1 auf einen geringeren zweiten Bedienersignalwert S2 fest, so errechnet sie aus letzterem den zugeordneten Bremswertsignalwert aS2 gemäß der Kennlinie (V) für die Bremsbetätigung, errechnet aus diesem nach der Beziehung (I) den zweiten Bremswertsignalwert aS2' und gibt diesen an das Steuergerät (14) ab. Dieses Spiel wiederholt die Steuereinrichtung (3), solange sie von einem Umlauf zum nächsten einen Abfall des Bedienersignals (S) feststellt. Stellt sie von einem Umlauf zum nächsten keinen Abfall des Bedienersignals (S) mehr fest, so hält sie die Abgabe des zweiten Bremswertsignalwerts aS2' bis zur Feststellung einer Veränderung des Bedienersignals (S) aufrecht. Das Steuergerät (14) mindert das Energiesignal entsprechend und besorgt damit die Einstellung des zweiten Bremswertes B2. Dadurch wird, wie weiter vorn schon ausgeführt, die Hysterese übersprungen und die Bremsanlage zum sofortigen Ansprechen gebracht.

Bei einem weiteren Abfall des Bedienersignals (S) mindert die Steuereinrichtung (3) das Bremswertsignal (aS), ausgehend von dem Bremswertsignalwert aS2', entsprechend und gibt dieses ab. Das Steuergerät (14) mindert wieder das Energiesignal entsprechend und besorgt damit die Einstellung des entsprechenden Bremswertes (B) gemäß der Kennlinie (W) für das Bremslösen.

Es gibt Einsatzfälle mit Betriebsbedingungen, die zu einem häufigen Schwanken des Bedienersignals (S) zwischen Abfall und Wiederanstieg führen, beispielsweise ein Fahrzeug auf unebener Fahrbahn. In diesen Fällen kann die Reaktion der Bremsanlage auf jeden Abfall des Bedienersignals, und sei er noch so gering, ein ungleichmäßiges und unerwünscht nervöses Bremsverhalten zur Folge haben. Dieses zieht zudem in der Regel einen nachteiligen Energie-Mehrverbrauch nach sich.

Für solche Einsatzfälle kann die Bremsanlage zwecks Glättung der Ungleichmäßigkeit so fortgebildet werden, daß die Steuereinrichtung (3) auf einen - die Berechnung des zweiten Bremswertsignalwertes aS2' auslösenden - Abfall des Bedienersignals (S) erst erkennt, wenn dieser einen vorbestimmten Schwellwert (SWL) erreicht hat. Dieser Schwellwert (SWL) kann über den gesamten Bedienersignalbereich eine konstante Größe haben, er kann aber auch eine Funktion des Bedienersignals (S) sein, mit anderen Worten: seine Größe kann von der Größe des Bedienersignals (S) abhängen. Ein Schwellwertverlauf mit der zuletzt genannten Charakteristik ist als gestrichelte Linie (R) in Figur 1 eingetragen. Die jeweilige Differenz parallel zur Abszisse zwischen der Soll-Kennlinie (T) und der Linie (R) gibt für jedes Bediensignal (S) den zugeordneten Schwellwert (SWL) an.

Bei dieser Fortbildung ist in der Steuereinrichtung (3) zusätzlich die Beziehung

$$SWL = SWLF \cdot S \tag{II}$$

gespeichert, welche die Größe des Schwellwerts (SWL) zu jedem Bedienersignal (S) angibt. Darin ist SWLF ein Schwellwertfaktor. Dieser kann beispielsweise zwischen 0,002 und 0,1 betragen, so daß in der Regel der Schwellwert sich auf 0,2 % bis 10 % des jeweils zugehörigen Bedienersignals (S) beläuft. Zum besseren Verständnis ist die Linie (R) so eingetragen, daß der jeweilige Schwellwert (SWL) unverhältnismäßig groß erscheint.

Stellt bei dieser Fortbildung die Steuerelektronik (3) von einem Umlauf zum nächsten einen Abfall des Bedienersignals von S1 auf S2 fest, so errechnet sie aus der Beziehung (II) den S1 zugeordneten Wert SWL1 des Schwellwerts (SWL) und prüft, ob der zweite Bedienersignalwert den Wert S2=S1-SWL1=S1-SWLF $\cdot$ S1=S1(1-SWF) erreicht hat. Ist dies nicht der Fall, gibt sie das Bedienersignal (S) als Bremswertsignal (aS) ab bzw. errechnet aus dem Bedienersignal (S) das Bremswertsignal (aS) und gibt dieses ab. Da diese Verringerung des Bremswertsignals die Hysterese nicht überwindet, hat sie keine Reaktion der Bremsanlage zur Folge. Erst wenn die Steuereinrichtung (3) bei einem Umlauf feststellt, daß der zweite Bedienersignalwert S2 den genannten Wert erreicht hat, berechnet sie aus der Beziehung (I) den zweiten Bremswertsignalwert aS2', gibt diesen an das Steuergerät (14) ab und wiederholt dies, solange sie von einem Umlauf zum nächsten einen Abfall des Bedienersignals (S) feststellt, mit der schon beschriebenen Folge, daß der zweite Bremswert B2 eingestellt wird.

Im Falle eines Schwellwerts (SWL) mit konstanter Größe ist dieser statt der Beziehung (II) in der Steuereinrichtung (3) gespeichert. Mit diesem wirkt dann die Fortbildung der Bremsanlage bzw. der Steuereinrichtung (3) wie soeben beschrieben.

Die durch die Einführung des Schwellwertes (SWL) erzielte Wirkung kann der Bediener als (geringe) Hysterese empfinden. Dieses Empfinden würde jedoch die durch die Erfindung erzielte Verbesserung bei weitem nicht aufheben.

Die Steuereinrichtung (3) kann auch so fortgebildet sein, daß sie im Bereich hoher Bedienersignalwerte die Anwendung des Schwellwertes (SWL) unterläßt.

Die weiter oben angegebene Beziehung (I) beinhaltet, wie der Fachmann nachvollziehen kann, eine Beschreibung der Hysterese der Bremsanlage mit mathematischen Mitteln. Dieser Hysterese liegen Untersuchungen mit einer oder mehreren konkreten Bremsen zugrunde. Von dieser, nachstehend "theoretisch" genannten, Hysterese kann die im Einsatz auftretende reale Hysterese aus verschiedenen Gründen abweichen. Solche Gründe können betriebs-, wartungs- oder altersbedingte Veränderungen in der Bremsanlage, speziell in der Bremse, aber auch unvermeidliche Qualitätsstreuungen aus der Serienfertigung der Komponenten der Bremsanlage, insbesondere der Bremse (11, 12), sein. Aus den betriebsbedingten Einflüssen sei insbesondere der thermische Zustand der Bremse (11, 12) hervorgehoben.

Ist die reale Hysterese größer als die theoretische (gestrichelte Linie N in Figur 2), so bestimmt der nach der Beziehung (I) berechnete zweite Bremswertsignalwert aS2' einen Punkt aS2'/B2, der innerhalb des realen Hysteresefeldes liegt, und die Bremsanlage reagiert nicht bzw. erst bei einer weiteren Absenkung des Bedienersignals (S). Ist die reale Hysterese kleiner als die theoretische (gestrichelte Linie O in Figur 2), so hat der nach der Beziehung (I) berechnete zweite Bremssignalwert aS2' den geringeren Bremswert B4 in Figur 2 als den geforderten zweiten Bremswert B2 zur Folge. Diese Erscheinungen können dazu führen, daß die durch die Erfindung erzielten Verbesserungen ganz oder teilweise verlorengehen.

Die Bremsanlage kann deshalb so fortgebildet werden, daß die Steuereinrichtung (3) den zweiten Bremswertsignalwert aS2' an eine etwa auftretende reale Hysterese adaptiert.

Zu diesem Zweck wird ein Bremswertsensor vorgesehen und mit der Steuerelektronik (3) verbunden oder, wie dargestellt, der etwa vorhandene Bremswertsensor (13) mit der Steuerelektronik (3) verbunden. Außerdem wird die Steuereinrichtung (3) wie folgt ausgebildet. Hat die Steuereinrichtung (3) aufgrund eines Abfalls des Bedienersignals (S) auf den zweiten Bedienersignalwert S2 den zweiten Bremswertsignalwert aS2' nach der Beziehung (I) berechnet und ausgegeben, so mißt der Bremswertsensor (13) den sich daraufhin einstellenden Ist-Bremswert und gibt an die Steuereinrichtung (3) ein entsprechendes Signal ab. Die Steuereinrichtung (3) vergleicht den Ist-Bremswert mit dem zweiten Bremswert B2, den der Bediener gemäß der Soll-Kennlinie (T) mit dem zweiten Bedienersignalwert S2 fordert. Stellt die Steuereinrichtung (3) dabei fest, daß der Ist-Bremswert kleiner als der geforderte zweite Bremswert B2 ist, beispielsweise B4, dann ist die reale Hysterese kleiner als die theoretische. In diesem Fall vergrößert die Steuereinrichtung (3) den nach der Beziehung (I) errechneten zweiten Bremswertsignalwert aS2' um einen vorbestimmten Wert. Dies kann geschehen, indem die Steuereinrichtung (3) zu der rechten Seite der Beziehung (I) einen vorbestimmten Korrekturwert addiert oder indem sie die rechte Seite oder das die Hysterese bildende Glied der rechten Seite mit einem vorbestimmten Korrekturfaktor (KF) multipliziert. Im letzteren Falle wird aus der Beziehung (I) die Beziehung (Ia)

$$aS2'=aS2-[aSA-aSR+(aSOV-aSOW-aSA+aSR) \cdot (aS2-aSA)/(aSOV-aSA)] \cdot KF,$$

worin KF kleiner als 1 ist.

Stellt die Steuereinrichtung (3) nach Ausgabe des nach der Beziehung (I) berechneten zweiten Bremswertsignalwertes aS2' keinen Abfall des Ist-Bremswertes fest, empfängt also die Steuereinrichtung (3) von dem Bremswertsensor (13) kein entsprechendes Signal, so ist die reale Hysterese größer als die theoretische. In diesem Fall verringert die Steuereinrichtung (3) den nach der Beziehung (I) errechneten zweiten Bremswertsignalwert aS2'. Dies kann geschehen, indem die Steuereinrichtung (3) von der rechten Seite der Beziehung (I) einen vorbestimmten Korrekturwert abzieht oder indem sie in der Beziehung (Ia) den Korrekturfaktor (KF) größer als 1 setzt.

Stellt die Steuereinrichtung (3) bei einem oder mehreren folgenden Umläufen fest, daß sie mit der ersten vorgenommenen Korrektur des zweiten Bremswertsignalwertes aS2' keine Übereinstimmung von Ist-Bremswert und dem geforderten zweiten Bremswert B2, also keine Adaption, erzielt hat, so wiederholt sie die Korrektur bis zur Adaption, wobei "Adaption" mit unvermeidbaren Toleranzen zu verstehen sein kann.

Dabei kann im Falle kleinerer realer als theoretischer Hysterese die Steuereinrichtung (3) so ausgebildet sein, daß sie die angewandten Korrekturwerte bzw. Korrekturfaktoren nach der Größe der festgestellten Abweichung zwischen Ist-Bremswert und gefordertem zweiten Bremswert B2 bemißt.

So kann beispielsweise die Steuerelektronik (3) bei großer Abweichung mit einem Korrekturfaktor KF = 0,95 beginnen und diesen mit zunehmender Annäherung an den adaptierten Zustand in kleiner werdenden Schritten auf den erforderlichen Endwert von z. B. KF = 0,85 verringern.

Im Falle größerer realer als theoretischer Hysterese kann die Steuerelektronik (3), bis der nach der Beziehung (Ia) korrigierte zweite Bremswertsignalwert aS2' die Grenze des Hysteresefeldes erreicht, beispielsweise einen Korrekturfaktor KF = 1,02 ansetzen.

Bei realen Bremsanlagen folgt wegen der unvermeidlichen Ansprechverzögerungen und des Zeitbedarfs einer Änderung der Zuspannenergie im Normalfall der Bremswert (B) einer Änderung des Bedienersignals (S) zeitlich verzögert. Es ist deshalb zweckmäßig, die Steuereinrichtung (3) so auszubilden, daß sie die Wiederholung des beschriebenen Vergleichs und der beschriebenen Korrektur erst einige Umläufe, nachdem sie keinen Abfall des Bedienersignals (S) mehr festgestellt hat, vornimmt. Aus dem gleichen Grund ist es auch zweckmäßig, die Steuereinrichtung (3) so auszubilden, daß sie etwa erforderliche weitere Wiederholungen jeweils wieder einige Umläufe später vornimmt. Dem Bediener macht sich ein solches Verhalten angesichts der von üblichen Mikroprozessoren ermöglichten hohen Umlauffrequenz überhaupt nicht bemerkbar.

Die Steuerelektronik (3) kann des weiteren so ausgebildet sein, daß sie die Beziehung (Ia), die zur Adaption geführt hat, speichert und bei späteren Bremslösevorgängen bis zu einem etwaigen Erfordernis weiterer Korrekturen der Berechnung des zweiten Bremswertsignalwerte aS2' zugrundelegt.

Die vorstehend beschriebene Fortbildung des Ausführungsbeispiels zur Adaption des zweiten Bremswertsignalwertes aS2' ist ausführbar sowohl bei der Grundausführung der Bremsanlage, die auf jeden Abfall des Bedienersignals (S) reagiert, als auch bei der Fortbildung, die erst nach Abfall des Bedienersignals (S) um den Schwellwert (SWL) reagiert.

Nun sei angenommen, der Bediener wolle nach einem teilweisen Bremslösen auf den zweiten Bremswert B2 oder einen geringeren Bremswert den Bremswert wieder erhöhen, beispielsweise auf einen dritten Bremswert B3, die Bremsanlage also wieder rückbetätigen. Dann erhöht der Bediener die von ihm in den Bremswertgeber (1) eingeleitete Stellgliedkraft und/oder den Stellgliedweg so, daß der Bremswertgeber (1) den gemäß der Soll-Kennlinie (T) in Figur 1 dem dritten Bremswert B3 zugeordneten Bedienersignalwert S3 abgibt. Dann springt die Steuereinrichtung (3) von der Abgabe des zweiten Bremssignalwertes aS2' bzw. des geringeren Bremswertsignalwertes auf die Abgabe des dem dritten Bedienersignalwert S3 gemäß der Kennlinie (V) für die Bremsbetätigung zugeordneten dritten Bremswertsignalwertes aS3 - siehe Figur 2 - um, mit dem Ergebnis, daß die Energie-Zumeßeinrichtung (10, 14) die Zuspannenergie entsprechend ändert und die Bremsanlage ihre Bremswertabgabe auf den dritten Bremswert B3 steigert.

Die Steuereinrichtung (3) stellt also nach einem Abfall des Bedienersignals bei einem Wiederanstieg des Bedienersignals (S), auf einen den dritten Bremswert B3 fordernden dritten Bedienersignalwert S3 das Bremswertsignal (aS), ausgehend von dem dem letzten Bedienersignalwert zugeordneten Bremswertsignalwert gemäß der Kennlinie (W) für das Bremslösen, auf den dem dritten Bremswert B3 gemäß der Kennlinie (V) für die Bremsbetätigung zugeordneten Bremswertsignalwert aS3 ein.

Dadurch bewirkt die Steuereinrichtung (3), daß sich die Bremsanlage auch beim Wiederbetätigen bzw. Rückbetätigen gemäß der Soll-Kennlinie (T) in Figur 1 verhält, woraus sich auch in diesem Fall für den Bediener der Eindruck einer hysteresefreien Bremse ergibt.

Ausgelöst wird diese Funktion der Steuereinrichtung (3), wenn die Steuereinrichtung (3) von einem Umlauf zum nächsten eine Umkehr von fallendem Bedienersignal (S) zu steigendem Bedienersignal (S) oder nach einem früheren Abfall des Bedienersignals (S) und einer darauf folgenden einen oder mehrere Umläufe langen Phase gleichbleibenden Bedienersignals (S) von einem Umlauf zum nächsten einen Anstieg des Bedienersignals (S) feststellt. Dabei spielt keine Rolle, ob die Steuereinrichtung (3) beim vorangegangenen Bremslösen die Beziehung (I) oder die Beziehung (Ia) angewandt hat.

Aus den gleichen Gründen, wie sie weiter vorn im Zusammenhang mit dem Bremslösen erwähnt sind, kann die Steuereinrichtung (3) so fortgebildet sein, daß sie auch bei einem Wiederbetätigen bzw. Rückbetätigen auf einen - die Berechnung des dritten Bremswertsignalwertes aS3 auslösenden - Wiederanstieg des Bedienersignals (S) erst erkennt, wenn dieser einen vorbestimmten Schwellwert (SWB) erreicht hat. Auch der Schwellwert (SWB) kann über den gesamten Bedienersignalbereich eine konstante Größe haben oder eine Funktion des Bedienersignals (S) sein. Ein Schwellwertverlauf mit der zuletzt genannten Charakteristik ist als gestrichelte Linie (P) in Figur 1 eingetragen.

Bei dieser Fortbildung ist in der Steuereinrichtung (3) zusätzlich die Beziehung

$$SWB = SWBF \cdot S \qquad\qquad\qquad (III)$$

gespeichert, welche die Größe des Schwellwerts (SWB) zu jedem Bedienersignal (S) angibt. Darin ist SWBF wieder ein Schwellwertfaktor. Für diesen sowie den Schwellwert SWB und die Linie (P) gelten die weiter oben im Zusammenhang mit dem Schwellwert SWL beim Bremslösen gemachten Aussagen entsprechend.

Stellt bei dieser Fortbildung die Steuerelektronik (3) von einem Umlauf zum nächsten einen Anstieg des Bedienersignals (S), beispielsweise vom zweiten Bedienersignalwert S2 auf den dritten Bedienersignalwert S3, fest, so errechnet sie aus der Beziehung (III) den S2 zugeordneten Wert SWB2 des Schwellwerts (SWB) und prüft, ob der dritte Bedienersignalwert den Wert $S3 = S2 + SWB2 = {}=S2 + SWBF \cdot S2 = S2(1 + SWBF)$ erreicht hat. Ist dies nicht der Fall, gibt sie das Bedienersignal (S) als Bremswertsignal (aS) ab bzw. errechnet aus dem Bedienersignal (S) das Bremswertsignal (aS) und gibt dieses ab. Da letzteres die Hysterese nicht überwindet, hat dies keine Reaktion der Bremsanlage zur Folge. Erst wenn die Steuereinrichtung (3) bei einem Umlauf feststellt, daß der dritte Bedienersignalwert S3 den genannten Wert erreicht hat, springt sie auf die Abgabe des dritten Bremswertsignalwertes aS3 um mit der bereits erwähnten Folge der Erhöhung der Bremswertabgabe auf den dritten Bremswert B3.

Die bisher erwähnte Bremse (11, 12) kann stellvertretend für mehrere Bremsen stehen. Jeder anderen Bremse kann, wie der dargestellten Bremse (5, 6), ein eigener Energievorrat (8), ein eigener Energieverteiler (7) und in nicht dargestellter Weise ein eigener Kanal in dem Steuergerät (14) zugeordnet sein.

Es ist auch üblich, mehreren Bremsen den gleichen Energievorrat zuzuordnen. In diesem Fall kann allen einem Energievorrat zugeordneten Bremsen ein gemeinsamer Energieverteiler zugeordnet sein, es kann aber auch jeder einzelnen Bremse ein eigener Energieverteiler zugeordnet sein.

Bremsanlagen mit mehreren Bremsen inclusive ihrer zugeordneten Komponenten sind in vielen technischen Gebieten gebräuchlich, beispielsweise in der Fahrzeugtechnik. Dient die dargestellte Bremsanlage als Fahrzeugbremsanlage, so ist es üblich, daß jede der dargestellten Bremsen (5, 6 bzw. 11, 12) für mehrere Bremsen an einer Fahrzeugachse steht.

Es ist auch üblich, insbesondere in der Fahrzeugtechnik, den auf jede Bremse bzw. die Bremsen jeder Achse entfallenden Bremswertanteil durch das Steuergerät (14) nach weiteren Parametern variieren zu lassen. Eine solche Möglichkeit ist durch einen weiteren Sensor (4) deutet, der mit dem Steuergerät (14) verbunden ist. Der Sensor (4) könnte beispielsweise ein Fahrzeuggewicht- oder Achslastsensor, ein Retardermomentsensor, ein Temperatursensor oder ein Sensor für andere gebräuchliche Parameter sein. Es können auch mehrere Sensoren vorgesehen sein, nach deren Signalen der von der Bremsanlage erzeugte Bremswert oder dessen auf einzelne Bremsen entfallende Anteile beeinflußbar sind.

Abschließend sein darauf hingewiesen, daß sich der Schutzbereich der vorliegenden Erfindung nicht in dem Ausführungsbeispiel mit seinen erwähnten Fortbildungen erschöpft, sondern alle Ausgestaltungen umfaßt, deren Merkmale sich den Patentansprüchen unterordnen.

## Patentansprüche

1. Bremsanlage mit wenigstens einer durch Zufuhr von Zuspannenergie (Z) betätigten Bremse (11, 12), einem ein willkürlich eingestelltes Bediensignal (S) abgehenden Bremswertgeber (1), einer ein Bremswertsignal (aS) empfangenden Energie-Zumeßeinrichtung (10, 14) und einer dazwischen angeordneten Steuereinrichtung (3) für die der Energie-Zumeßeinrichtung (10, 14) nachgeordnete Bremse (11, 12), wobei der Bremsanlage eine Soll-Kennlinie (T) eines Bremswertes (B) als Funktion des Bediensignals (S) abverlangt wird, wobei der Bremswert von der von der Bremse (11, 12) erzeugten Bremskraft (K) Wenigstens mitbestimmt wird, wobei die Bremsanlage infolge einer Hysterese der Bremse (11, 12) unterschiedlich verlaufende Kennlinien (V, W) des Bremswertes (B) als Funktion des Bremswertsignals (aS) für die Bremsbetätigung und das Bremslösen aufweist und wobei die Steuereinrichtung (3) bei einer Bremsbetätigung das Bremswertsignal (aS) dem Bediensignal (S) gleich oder proportional bemißt,
dadurch gekennzeichnet,
daß in der Steuereinrichtung (3) die Kennlinien (V, W) des Bremswertes (B) als Funktion des Bremswertsignals (aS) gespeichert sind oder aus geeigneten Daten berechnet werden und daß die Steuereinrichtung (3) bei einem Abfall des Bediensignals (S) von einem einen ersten Bremswert B1 fordernden ersten Bediensignalwert S1 auf einen einen zweiten Bremswert B2 fordernden zweiten Bediensignalwert S2 das Bremswertsignal (aS), ausgehend von dem dem ersten Bremswert B1 zugeordneten Bremswertsignalwert aS1 gemäß der Kennlinie (V) für die Bremsbetätigung, unter Überspringen der Differenz der genannten Kennlinien (V, W) des Bremswertes (B) direkt auf den dem zweiten Bremswert B2 gemäß der Kennlinie (W) für das Bremslösen zugeordneten Bremswertsignalwert aS2' einstellt.

2. Bremsanlage nach Anspruch 1,
dadurch gekennzeichnet,
daß die Steuereinrichtung (3) nach einem Abfall des Bediensignals (S) bei einem Wiederanstieg desselben auf einen einen dritten Bremswert B3 fordernden dritten Bediensignalwert S3 das Bremswertsignal (aS), ausgehend von dem dem letzten Bediensignalwert zugeordneten Bremswertsignalwert gemäß der Kennlinie (W) für das Bremslösen, unter Überspringen der Differenz der Kennlinien (V, W) des Bremswertes (B) für die Bremsbetätigung und das Bremslösen direkt auf den dem dritten Bremswert B3 gemäß der Kennlinie (V) für die Bremsbetätigung zugeordneten Bremswertsignalwert aS3 einstellt.

3. Bremsanlage nach Anspruch 1,
dadurch gekennzeichnet,
daß die Steuereinrichtung (3) auf einen Abfall des Bediensignals (S) erst nach einem Abfall desselben um einen vorbestimmten Schwellwert (SWL) erkennt.

4. Bremsanlage nach Anspruch 2,
dadurch gekennzeichnet,
daß die Steuereinrichtung (3) auf einen Wiederanstieg des Bediensignals (S) erst nach einem Wiederanstieg desselben um einen vorbestimmten Schwellwert (SWB) erkennt.

5. Bremsanlage nach Anspruch 3,
dadurch gekennzeichnet,
daß der Schwellwert (SWL) eine konstante Größe hat.

6. Bremsanlage nach Anspruch 4,
dadurch gekennzeichnet,
daß der Schwellwert (SWB) eine konstante Größe hat.

7. Bremsanlage nach Anspruch 3,
dadurch gekennzeichnet,
daß der Schwellwert (SWL) eine Funktion des Bediensignals (S) ist.

8. Bremsanlage nach Anspruch 4,
dadurch gekennzeichnet,
daß der Schwellwert (SWB) eine Funktion des Bediensignals (S) ist.

9. Bremsanlage nach einem der vorhergehenden Ansprüche,
dadurch gekennzeichnet, daß die Bremsanlage einen mit der Steuereinrichtung (3) verbundenen Bremswertsensor (13) aufweist und daß die Steuereinrichtung (3) so ausgebildet ist, daß sie bei dem Abfall des Bedienersignals (S) auf den zweiten Bedienersignalwert S2 den von dem Bremswertsensor (13) gemessenen Ist-Bremswert mit dem gemäß der Soll-Kennlinie (T) geforderten zweiten Bremswert B2 vergleicht und bei Feststellung einer Abweichung den zweiten Bremswertsignalwert aS2' korrigiert.

**Claims**

1. A brake system having at least one brake (11,12) actuated by supply of application energy (Z), a brake value transducer (1) delivering a selectively adjusted operator signal (S), an energy-metering arrangement (10, 14) receiving a brake value signal (aS), and arranged therebetween a control arrangement (3) for the brake (11, 12) arranged downstream of the energy-motoring arrangement (10, 14), wherein a desired characteristic (T) of a brake value (B) is demanded of the brake system as a function of the operator signal (S), the brake value being at least jointly determined by the brake force (K) produced by the brake (11, 12), wherein, as a consequence of a hysteresis of the brake (11, 12), the brake system has differently running characteristics (V, W) of the brake value (B) as a function of the brake value signal (aS) for brake actuation and for brake release, and wherein, on a brake actuation, the control arrangement (3) calculates the brake value signal (aS) to be equal to or proportional to the operator signal (S), characterized in that
in the control arrangement (3) the characteristics (V, W) of the brake value (B) are stored as a function of the brake value signal (aS) or are calculated from suitable data and
in that, on a drop in the operator signal (S) from a first operator signal value S1 requiring a first brake value B1 to a second operator signal value S2 requiring a second brake value B2, the control arrangement (3), starting from the brake value signal value aS1 according to the characteristic (V) for brake actuation associated with the first brake value B1, jumping over the difference in the said characteristics (V, W) of the brake value (B), adjusts the brake value signal (aS) directly to the brake value signal value aS2' associated with the second brake value B2 according to the characteristic (W) for brake release.

2. A brake system according to claim 1, characterized in that
the control arrangement (3), after a drop in the operator signal (S), on a repeated increase of the same to a third operator signal value S3 requiring a third brake value B3, adjusts the brake value signal (aS), starting from the brake value signal value according to the characteristic (W) for brake release associated with the last operator signal value, jumping over the difference in the characteristics (V, W) of the brake value (B) for brake actuation and brake release, directly to the brake value signal value aS3 associated with the third brake value B3 according to the characteristic (V) for brake actuation.

3. A brake system according to claim 1, characterized in that
the control arrangement (3) recognizes a drop in the operator signal (S) only after a drop in the same by a predetermined threshold value (SWL).

4. A brake system according to claim 2, characterized in that the control arrangement (3) recognizes a repeated increase in the operator signal (S) only after a repeated increase in the same by a predetermined threshold value (SWB).

5. A brake system according to claim 3, characterized in that
the threshold value (SWL) has a constant magnitude.

6. A brake system according to claim 4, characterized in that
the threshold value (SWB) has a constant magnitude.

7. A brake system according to claim 3, characterized in that the threshold value (SWL) is a function of the operator signal (S).

8. A brake system according to claim 4, characterized in that the threshold value (SWB) is a function of the operator signal (S).

9. A brake system according to any one of the preceding claims, characterized in that the brake system has a brake value sensor (13) connected to the control arrangement (3), and the control arrangement (3) is constructed so that, on the drop in the operator signal (S) to the second operator signal value S2, it compares the actual brake value measured by the brake value sensor (13) with the second brake value B2 required according to the desired characteristic (T) and if a departure therefrom is detected it corrects the second brake value signal value aS2'.

## Revendications

1. Installation de freinage équipée d'au moins un frein (11, 12) actionné par apport d'énergie de serrage (Z), d'un émetteur de valeur de freinage (1) délivrant un signal d'opérateur (S) réglé de façon arbitraire, d'un dispositif de mesure d'énergie (10, 14) recevant un signal de valeur de freinage (aS) et d'un dispositif de commande (3) intermédiaire pour le frein (11, 12) disposé en aval du dispositif de mesure d'énergie (10, 14), une caractéristique de consigne (T) d'une valeur de freinage (B) en fonction du signal d'opérateur (S) étant demandée par l'installation de freinage, la valeur de freinage étant déterminée au moins par la force de freinage (K) générée par le frein (11, 12), l'installation de freinage par suite d'un hystérésis du frein (11, 12) présentant des caractéristiques (V, W) d'allures différentes de la valeur de freinage (B) en tant que fonction du signal de valeur de freinage (aS) pour l'actionnement et le desserrage du frein et le dispositif de commande (3) dans le cas d'un actionnement du frein mesurant le signal de valeur de freinage (aS) égal ou proportionnel au signal d'opérateur (S), caractérisée en ce que

   dans le dispositif de commande (3) sont mémorisées les caractéristiques (V, W) de la valeur de freinage (B) en tant que fonction du signal de valeur de freinage (aS) ou sont calculées à partir de données appropriées et

   en ce que le dispositif de commande (3) dans le cas d'une chute du signal d'opérateur (S) depuis une première valeur de signal d'opérateur S1 demandant une première valeur de freinage B1 règle sur une seconde valeur de signal d'opérateur S2 exigeant une seconde valeur de freinage B2, le signal de valeur de freinage (aS), à partir de la valeur de signal de valeur de freinage aS associée à la première valeur de freinage b1, selon la caractéristique (V) pour l'actionnement du frein, par franchissement de la différence des caractéristiques précitées (V, W), de la valeur de freinage (B) directement sur la valeur de signal de valeur de signal aS2' associée à la seconde valeur de freinage B2 selon la caractéristique (W) pour le desserrage du frein.

2. Installation de freinage selon la revendication 1, caractérisée en ce que le dispositif de commande (3) après une chute du signal d'opérateur (S) dans le cas d'un nouvel accroissement de celui-ci sur une troisième valeur de signal d'opérateur S3 exigeant une troisième valeur de freinage B3 règle le signal de valeur de freinage (aS), à partir de la valeur de signal de valeur de freinage associée à la dernière valeur de signal d'opérateur selon la caractéristique (W) pour le desserrage du frein, par franchissement de la différence des caractéristiques (V, W) de la valeur de freinage (B) pour l'actionnement du frein et le desserrage de celui-ci directement sur la valeur de signal de valeur de freinage aS3 associée à la troisième valeur de freinage B3 selon la caractéristique (V) pour l'actionnement du frein.

3. Installation de freinage selon la revendication 1, caractérisée en ce que le dispositif de commande (3) constate une chute du signal d'opérateur (S) uniquement après une chute de celui-ci autour d'une valeur de seuil prédéterminée (SWL).

4. Installation de freinage selon la revendication 2, caractérisée en ce que le dispositif de commande (3) lors d'un nouvel accroissement du signal d'opérateur (S) constate celui-ci uniquement après un nouvel accroissement autour d'une valeur de seuil prédéterminée (SWB).

5. Installation de freinage selon la revendication 3, caractérisée en ce que la valeur de seuil (SWL) possède une grandeur constante.

6. Installation de freinage selon la revendication 4, caractérisée en ce que la valeur de seuil (SWB) possède une grandeur constante.

7. Installation de freinage selon la revendication 3, caractérisée en ce que la valeur de seuil (SWL) est une fonction du signal d'opérateur (S).

8. Installation de freinage selon la revendication 4, caractérisée en ce que la valeur de seuil (SWB) est une fonction du signal d'opérateur (S).

9. Installation de freinage selon l'une quelconque des revendications précédentes, caractérisée en ce que l'installation de freinage présente un capteur de valeur de freinage (13) relié au dispositif de commande (3) et en ce que le dispositif de commande (3) est réalisé de sorte qu'il compare dans le cas de la chute du signal d'opérateur (S) à la seconde valeur de signal d'opérateur S2 la valeur de freinage réelle mesurée par le capteur de valeur de freinage (13) à la seconde valeur de freinage B2 demandée selon la caractéristique de consigne (T) et dans le cas de la constatation d'un écart corrige la seconde valeur de signal de valeur de freinage aS2'.

FIG.1

FIG.2

FIG.3

FIG.4

EP 0 602 353 B1